# EUROPEAN PATENT SPECIFICATION

(11) **EP 3 476 613 B1**
(45) Date of publication and mention of the grant of the patent: **17.03.2021**
(21) Application number: 18202086.7
(22) Date of filing: 23.10.2018
(51) Int. Cl.: B41J 3/407, G06K 15/02, H04N 1/387, H04N 1/393

(54) **PRINTER APPARATUS, PRINTING METHOD, AND COMPUTER READABLE MEDIUM**
DRUCKVORRICHTUNG, DRUCKVERFAHREN UND COMPUTERLESBARES MEDIUM
IMPRIMANTE, PROCÉDÉ D'IMPRESSION ET SUPPORT LISIBLE PAR ORDINATEUR

(30) Priority: 26.10.2017 JP 2017207357
(43) Date of publication of application: 01.05.2019
(73) Proprietor: Toshiba Tec Kabushiki Kaisha, Shinagawa-ku Tokyo 141-8562 (JP)
(72) Inventor: TERAKADO, Kazuya, Shinagawa-ku, Tokyo 141-8562 (JP)
(74) Representative: Bandpay & Greuter

(56) References cited:
- EP-A1- 1 527 891
- JP-A- H05 151 216
- JP-A- 2001 088 392
- JP-A- 2003 046 763
- JP-A- 2005 292 961
- US-A1- 2014 285 827

## Description

### FIELD

Embodiments described herein relate generally to a printer apparatus, a printing method, and a computer readable medium.

### BACKGROUND

A printer apparatus is used in various fields. Such a printer apparatus receives printing data from a host apparatus and performs printing operations using the printing data. In general, the printing data indicates a printing size required by the printer apparatus to perform the operations on a standardized printing medium.

In the printer apparatus described above, an area in which the image can be actually printed on the medium (hereinafter, referred to as an effective printing area or size) is limited by a structure of a print head, setting of a margin area, or the like. Therefore, when the printing size instructed from the host apparatus exceeds the effective printing size, the printer apparatus may not be able to print the entire image on the medium properly.

A conventional printer apparatus rotates an image by 90 degrees and reduces the image at a predetermined ratio depending on the size of the image, thereby printing the image on the medium with the original size and further printing the rotated and reduced image on an upper or a lower area of the medium. As a result, the user can see the entire image even if the image is not printed within the effective printing area properly. JP 2001 088392 teaches to rotate the image to fit the label size and the print head width.

### SUMMARY OF INVENTION

To solve the above-cited problems, there is provided a printer apparatus according to claim 1.

Preferably the printer apparatus may further comprise a display device, wherein the processor may further be configured to control the display device to display information for confirming whether or not the reduction of the image is acceptable before reducing the image.

Preferably the printer apparatus may further comprise a sensor, wherein the processor may further be configured to identify the printable size based on an output from the sensor that has detected the printing medium.

Preferably the printing medium may be a label sheet.

The printing medium is a roll sheet.

The printing unit comprises a thermal head, and the printable size is determined based on a width of the thermal head in the width direction.

Preferably the processor may further be configured:
after printing a first image after rotation, to control the printing unit to print a second image on the printing medium after rotating the second image.

According to the invention, there is also provided a printing method according to claim 5.

Preferably the method may further comprise:
displaying on a display information for confirming whether or not the reduction of the image is acceptable before the image is reduced.

Preferably the printable size may be identified based on an output from a sensor of the printer apparatus that has detected the printing medium.

Preferably the printing medium may be a label sheet.

The printing medium is a roll sheet_{.}

The printable size is determined based on a width of a thermal head of the printer apparatus in the width direction.

According to the invention, there is also provided a non-transitory computer readable medium storing a program according to claim 8.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a view schematically illustrating a schematic structure of a printer according to an embodiment.
FIG. 2 is a diagram illustrating an example of a control system of the printer according to an embodiment.
FIGs. 3A and 3B are views illustrating an example of a roll sheet according to an embodiment.
FIG. 4 is a diagram illustrating an example of a functional configuration included in the printer of an embodiment.
FIG. 5 is a view schematically illustrating an example of printing data.
FIGs. 6A and 6B are views illustrating an example of a relationship between a printing size and an effective printing size.
FIG. 7 is a view illustrating an example of a print result.
FIG. 8 is a flowchart illustrating an example of printing executed by the printer of an embodiment.

### DETAILED DESCRIPTION

An embodiment provides a printer apparatus, a printing method, and a computer readable medium, which are capable of efficiently printing the entire image of a printing target within an effective printing area defined for a printing medium.

Hereinafter, various embodiments for a printer apparatus, a printer method, and a computer readable medium will be described in detail with reference to the accompanying drawings. In the following embodiments, a thermal type printer is described.

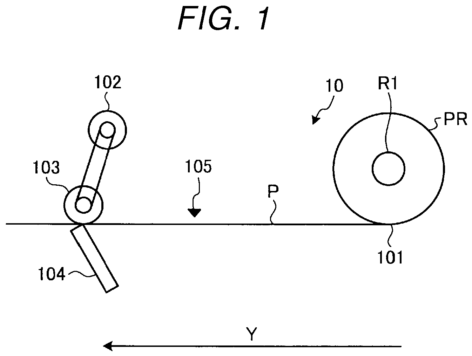

FIG. 1 is a view schematically illustrating a schematic structure of a printer 10 according to an embodiment. As illustrated in FIG. 1, a printer 10 includes a sheet storage unit 101, a stepping motor 102, a platen roller 103, a thermal head 104, and a sensor unit 105.

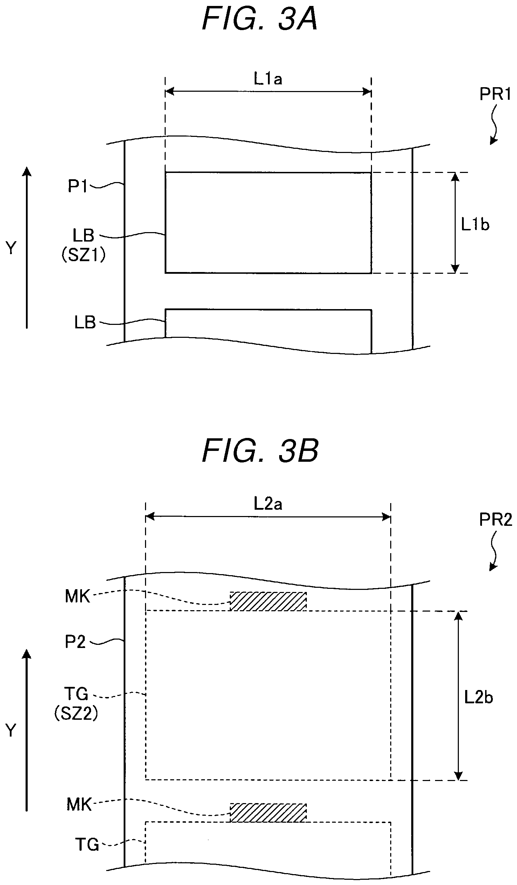

The sheet storage unit 101 stores a roll sheet PR formed by winding a sheet P that is a printing medium in a roll shape. The roll sheet PR is, for example, a label sheet PR1 or a tag sheet PR2 which are described later, or the like (see FIGs. 3A and 3B). The roll sheet PR is stored in the sheet storage unit 101 in a state of being capable of rotating around an axis of a roll shaft R1.

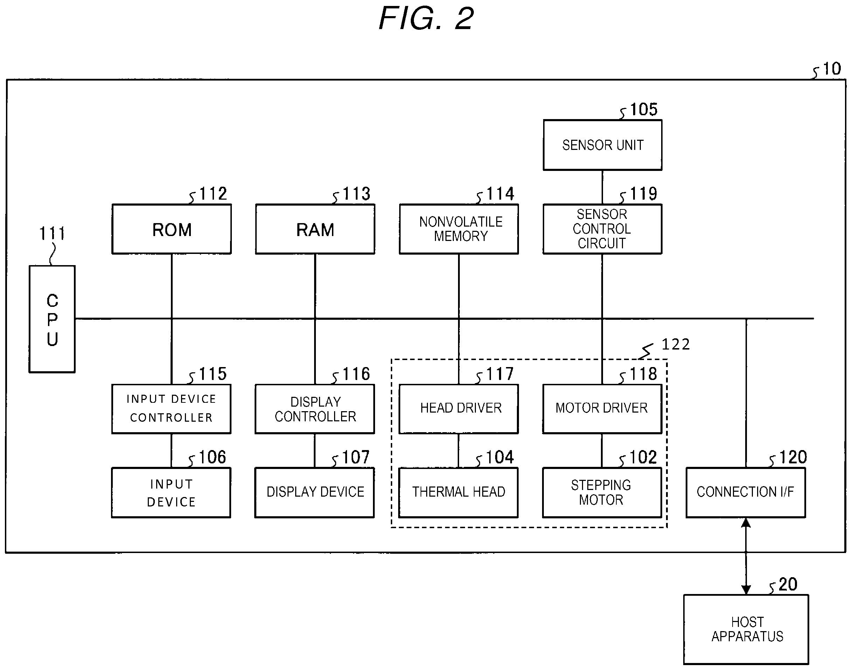

The stepping motor 102 is a driving source for rotating the platen roller 103. When the stepping motor 102 is driven by a motor driver 118 (see FIG. 2) which is described later, the stepping motor 102 drives the platen roller 103 via a gear or the like to rotate. The roll sheet PR is drawn out from the sheet storage unit 101 and is carried (sheet-fed) in a sheet carrying direction Y by rotational driving of the platen roller 103.

The thermal head 104 is disposed to face the platen roller 103. The thermal head 104 includes a plurality of heating elements in a row in a width direction of the roll sheet PR. Here, the "width direction" means a direction orthogonal to the sheet carrying direction of the roll sheet PR. A direction parallel to the sheet carrying direction of the roll sheet PR is referred to as a "height direction". In an embodiment, the stepping motor 102, the thermal head 104, the head driver 117, and the motor driver 118 form a printing unit 122.

The thermal head 104 heats the heating elements under the control of a head driver 117 (see FIG. 2) which is described later and heats the fed roll sheet PR, and thereby an image of a printing target included in printing data is printed. The roll sheet PR on which the image is printed is discharged from a paper discharge port (not illustrated).

The sensor unit 105 is provided along a sheet carrying path connecting the sheet storage unit 101 and the thermal head 104. The sensor unit 105 is a reflective or transmissive sensor device and performs detection of a label LB and a mark MK which are described later provided on a sheet surface of the roll sheet PR, and the like (see FIGs. 3A and 3B).

Next, a control system of the printer 10 will be described with reference to FIG. 2. FIG. 2 is a block diagram illustrating an example of the control system of the printer 10.

As illustrated in FIG. 2, the printer 10 includes a computer configuration of a Central Processing Unit (CPU) 111, a Read Only Memory (ROM) 112, a Random Access Memory (RAM) 113, and the like. The CPU 111 is a central processing unit that performs comprehensive control of an operation of the printer 10. The ROM 112 stores various programs executed by the CPU 111 and control information. The RAM 113 functions as a work area of the CPU 111.

In the printer 10, the CPU 111 is connected to a nonvolatile memory 114, an input device controller 115, a display controller 116, and the head driver 117. In the printer 10, the input device controller 115 is connected to an input device 106, the display controller 116 is connected to a display device 107, and the head driver 117 is connected to the thermal head 104, respectively.

The nonvolatile memory 114 is a storage medium such as a flash memory and stores various programs executed by the CPU 111 and various kinds of setting information. Specifically, the nonvolatile memory 114 stores an effective printing size as the setting information. The effective printing size is setting information indicating a printable size (range) on the roll sheet PR.

For example, the effective printing size can be set to a length of the thermal head 104 (heating element group) in the width direction. In addition, if the thermal head 104 is movable in the width direction, the effective printing size can be set to the length of the movable range. Therefore, the effective printing size is set to the maximum printable length by the thermal head 104 in the width direction. In this case, the length of the effective printing size in the height direction is unlimited (or not set).

The effective printing size may be defined as a rectangular area. In this case, the effective printing size is defined by the length in the width direction (hereinafter, referred to as an effective printing width) and the length in the height direction (hereinafter, referred to as an effective printing length). For example, if a margin area in which an image is not printed is provided at an outer peripheral portion of the roll sheet PR, the size of the remaining area (printing area) excluding the margin area is set as the effective printing size. Hereinafter, a relationship between the margin area and the printing area will be described with reference to FIGs. 3A and 3B.

FIGs. 3A and 3B are views illustrating an example of the roll sheet PR. Here, FIG. 3A is a view schematically illustrating the label sheet PR1 that is an example of the roll sheet PR. The label sheet PR1 is formed by sticking labels LB, which are peelable thermal sheets, on a long sheet P1 (backing sheet) at predetermined intervals and winding the sheet P1 in a roll shape. In the label sheet PR1, the label LB is the printing area, and the area excluding the label LB is the margin area. In this case, a size of the label LB is set as an effective printing size SZ1. Specifically, a length L1a of the label LB in the width direction is set as the effective printing width and a length L1b of the label LB in the height direction is set as the effective printing length. Therefore, a printable range on the label sheet PR1 can be limited to the size of the label LB. If a margin portion is provided around the label LB, the remaining area (printing area) excluding the margin portion is set as the effective printing size SZ1.

FIG. 3B is a view schematically illustrating the tag sheet PR2 that is an example of the roll sheet PR. The tag sheet PR2 is formed by winding a long heat sensitive sheet P2 in a roll shape. In the heat sensitive sheet P2, the marks MK are provided on a back side of a printing surface at predetermined intervals and each area partitioned between the marks MK corresponds to one tag sheet. When printing is performed on a rectangular area (hereinafter, referred to as a tag area) indicated by a broken line in the printing surface of the tag sheet, a tag area TG is the printing area and an area excluding the tag area TG is the margin area. In such a case, the size of the tag area TG is set as an effective printing size SZ2. Specifically, a length L2a of the tag area TG in the width direction is set as the effective printing width and a length L2b of the tag area TG in the height direction is set as the effective printing length. Therefore, the printable range on the tag sheet PR2 can be limited to the size of the tag area TG.

The printer 10 may store the effective printing size for each type of the roll sheet PR in the nonvolatile memory 114, and the effective printing size is automatically or manually set depending on types of the roll sheet PR to be used. To achieve the automatic setting, for example, the printer 10 may determine the type of the roll sheet PR based on a sensing result of the sensor unit 105. In addition, the printer 10 may determine the type of the roll sheet PR by reading type information that can identify the type from a code symbol, a radio-frequency identification (RFID) tag, or the like previously attached to the roll sheet PR via a reader device (not illustrated). In addition, the printer 10 may determine the type of the roll sheet PR based on data indicating the type of the roll sheet PR included in the printing data which is described later.

Returning to FIG. 2, the input device 106 has various operation keys. The input device controller 115 outputs a signal corresponding to an input made on the input device 106 to the CPU 111. The display device 107 is a display device such as a Liquid Crystal Display (LCD). Under the control of the CPU 111, the display controller 116 displays various kinds of information on the display device 107. Under the control of the CPU 111, the head driver 117 heats the thermal head 104 (heating elements).

In addition, in the printer 10, the CPU 111 is connected to the motor driver 118, a sensor control circuit 119, and a connection interface (I/F) 120. In the printer 10, the motor driver 118 is connected to the stepping motor 102, and the sensor control circuit 119 is connected to the sensor unit 105.

Under the control of the CPU 111, the motor driver 118 operates the stepping motor 102 to rotate by outputting a drive pulse signal to the stepping motor 102. The sensor control circuit 119 controls an operation of the sensor unit 105. Specifically, under the control of the CPU 111, the sensor control circuit 119 operates the sensor unit 105 and outputs a sensing result in the sensor unit 105 to the CPU 111.

The connection interface 120 is an interface for connecting a host apparatus 20 that is the external apparatus and the printer 10. The connection interface 120 is, for example, a serial interface such as a Universal Serial Bus (USB) or a communication interface capable of connecting to a network such as a Local Area Network (LAN). Under the control of the CPU 111, the connection interface 120 performs receiving and transmission of various data with the host apparatus 20. For example, the connection interface 120 receives the printing data of the printing target transmitted from the host apparatus 20.

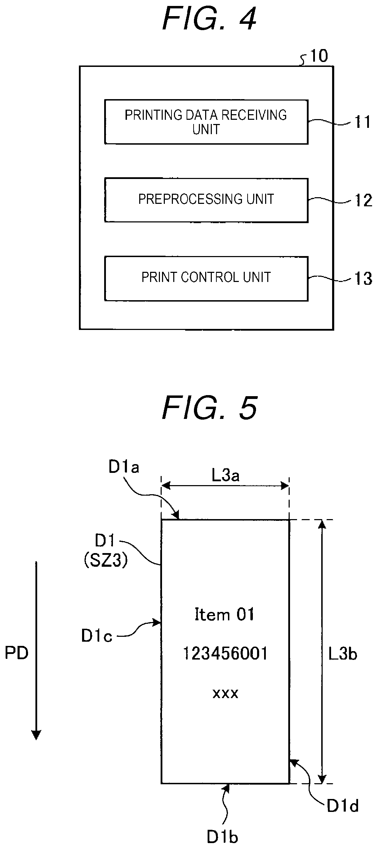

Next, a functional configuration of the printer 10 will be described. FIG. 4 is a diagram illustrating an example of the functional configuration included in the printer 10.

As illustrated in FIG. 4, the printer 10 includes a printing data receiving unit 11, a preprocessing unit 12, and a print control unit 13 as functional units. A part or all of the functional units may be realized as software modules stored in the ROM 112 or the nonvolatile memory 114 and loaded onto the RAM 113. In addition, a part or all of the functional units may be realized by one or more hardware modules such as electrical circuits designed to realize the functions described below.

The printing data receiving unit 11 receives printing data transmitted from the host apparatus 20 via the connection interface 120. The printing data includes image data indicating an image such as characters and graphics of the printing target. The image data may be raster data such as a bitmap image or command data for generating characters and graphics to be the printing target, or the like in the printer 10. In addition, the printing data includes data indicating a printing direction, a printing size, or the like.

The printing direction indicates the printing direction of the image when the image (image data) is printed. In an embodiment, the printing direction may indicate any one side (reference side) from which printing starts in a rectangular area surrounding the image. In this case, the printer 10 prints the image from the reference side of the image to a side facing the reference side based on the printing direction.

The printing size indicates the lengths in the width direction and the height direction when the image is printed. For example, the printing size indicates the lengths of the rectangular area surrounding the image in the width direction and the height direction. Here, the width direction and the height direction of the printing size are set based on the printing direction. Specifically, a length of the reference side in the printing direction is the length in the width direction and a length on a side orthogonal to the reference side is the length in the height direction.

The printing direction and the printing size may be explicitly included in the printing data. In addition, the printing direction and the printing size may be derived from an orientation of the image included in the printing data, coordinates of dots configuring the image, or the like. In addition, the printing data may include other data such as the type of the roll sheet PR.

The preprocessing unit 12 compares the printing size of the printing data with the effective printing size to execute processing for causing the printing size to fall within the effective printing size if the printing size does not fall within the effective printing size.

Specifically, the preprocessing unit 12 compares the lengths of the effective printing size with those of the printing size included in the printing data in the width direction and the height direction to determine whether or not the printing size falls within the effective printing size. If the lengths of the printing size in the width direction and the height direction are equal to or less than the lengths of the effective printing size, the preprocessing unit 12 determines that the printing size falls within the effective printing size. In this case, the preprocessing unit 12 outputs the image indicated by the printing data as it is to the print control unit 13.

In addition, if either or both the lengths of the printing size in the width direction and the height direction exceeds the lengths of the effective printing size, the preprocessing unit 12 determines that the printing size does not fall within the effective printing size.

If the printing size does not fall within the effective printing size, the preprocessing unit 12 determines whether or not the printing size, in which the lengths in the width direction and the height direction are exchanged with each other, falls within the effective printing size. Specifically, the preprocessing unit 12 determines whether or not the length of the printing size in the width direction is equal to or less than the length of the effective printing size in the height direction and the length of the printing size in the height direction is equal to or less than the length of the effective printing size in the width direction. Hereinafter, the condition relating to the determination is referred to as a rotation accommodation condition.

If the rotation accommodation condition is satisfied, i.e., when the length of the printing size in the width direction is equal to or less than the length of the effective printing size in the height direction and the length of the printing size in the height direction is equal to or less than the length of the effective printing size in the width direction, the preprocessing unit 12 generates an image obtained by rotating the orientation (printing direction) of the image by 90 degrees based on the image data. The preprocessing unit 12 outputs the rotated image to the print control unit 13. Therefore, since the length in the width direction and the length in the height direction of the printing size are exchanged with each other, the rotated image falls within the effective printing size. If the effective printing length is unlimited (unset), the preprocessing unit 12 does not compare the effective printing lengths and compares the effective printing width with the effective printing size.

On the other hand, if the rotation accommodation condition is not satisfied, i.e., when the length of the printing size in the width direction exceeds the length of the effective printing size in the height direction or the length of the printing size in the height direction exceeds the length of the effective printing size in the width direction, the preprocessing unit 12 reduces the printing size so that the printing size falls within the effective printing size. Specifically, the preprocessing unit 12 calculates a reduction ratio in which an occupation ratio of the printing size within the effective printing size (hereinafter, referred to as an effective reduction ratio) is maximized while maintaining a dimension ratio (hereinafter, referred to as an aspect ratio) of the printing size in the width direction and the height direction. The preprocessing unit 12 generates an image by reducing the printing size using the effective reduction ratio, and outputs the reduced image to the print control unit 13.

For example, assuming that the printing size in the width direction is 50 mm, the printing size in the height direction is 40 mm, the effective printing size in the width direction is 40 mm, and the effective printing size in the height direction is 30 mm, the preprocessing unit 12 calculates 4/5 times in the width direction and 3/4 times in the height direction respectively as the reduction ratio for setting the printing size to the effective printing size. In this case, if the reduction ratio is 4/5 times which is smaller than the other, since the printing size does not fall within the effective printing size, the preprocessing unit 12 selects the reduction ratio of 3/4 times which is larger than the other as the effective reduction ratio. The preprocessing unit 12 reduces the image using the selected effective reduction ratio.

In addition, for the printing size in which the lengths in the width direction and the height direction are exchanged with each other, the preprocessing unit 12 may calculate the reduction ratio in the same manner as described above. In this case, the preprocessing unit 12 calculates respective effective reduction ratios from the printing sizes before and after the exchange. The preprocessing unit 12 selects the effective reduction ratio, in which the occupation ratio is larger in the effective printing size, from the calculated effective reduction ratios, and reduces the image using the effective reduction ratio.

For example, in a case of the printing size of the example described above, the length in the width direction is 40 mm and the length in the height direction is 50 mm by exchanging the length in the width direction and the length in the height direction. In this case, the preprocessing unit 12 calculates 1 time in the width direction and 3/5 times in the height direction as the reduction ratio for causing the printing size to be the effective printing size and selects 3/5 times the reduction ratio, which is larger than the other. The preprocessing unit 12 compares 3/4 times the reduction ratio before the exchange with 3/5 times the reduction ratio after the exchange, and selects 3/4 times the reduction ratio before the rotation, which is smaller than the other as the effective reduction ratio where the occupation ratio is maximized in the effective printing size. The preprocessing unit 12 reduces the image using the selected effective reduction ratio. If the reduction ratio after the exchange is selected, the preprocessing unit 12 rotates the image by 90 degrees before or after the image is reduced.

As described above, in the preprocessing unit 12, if the printing size of the image does not satisfy the rotation accommodation condition, the reduction ratio where the size is maximized in the effective printing size is calculated and the printing size is reduced by using the calculated reduction ratio. Therefore, in the print control unit 13 which is described later, an entire image of the printing target can be efficiently printed within the effective printing size.

The preprocessing unit 12 may cause the display device 107 to display a screen for confirming whether or not the reduction is acceptable before reducing the image. In this case, the preprocessing unit 12 executes the reducing of the image on condition that the reduction is instructed via the input device 106.

The print control unit 13 cooperates with the head driver 117, the motor driver 118, and the sensor control circuit 119 to print the printing data input from the preprocessing unit 12 on the roll sheet PR.

Specifically, the print control unit 13 detects the printing area such as the label LB or the tag area TG from the roll sheet PR that is fed based on the sensing result of the sensor unit 105. When the printing area is detected, the print control unit 13 cooperates with the head driver 117 to print the image processed by the preprocessing unit 12 in the printing area on the roll sheet PR. Moreover, since a known method can be used for the detection method of the printing area and a printing method to the printing area, the description thereof will be omitted.

Here, operation examples of the preprocessing unit 12 and the print control unit 13 will be described with reference to FIGs. 3A and 5 to 7.

FIG. 5 is a view schematically illustrating an example of printing data. Printing data D1 illustrated in FIG. 5 has a printing size SZ3 having a length L3a in the width direction and a length L3b in the height direction (L3a<L3b). In addition, in the printing data D1, a printing direction PD is set so that printing is performed from a side D1a (reference side) to a side D1b. Characters (Item 01, ...) in the printing data D1 corresponds to the image (image data).

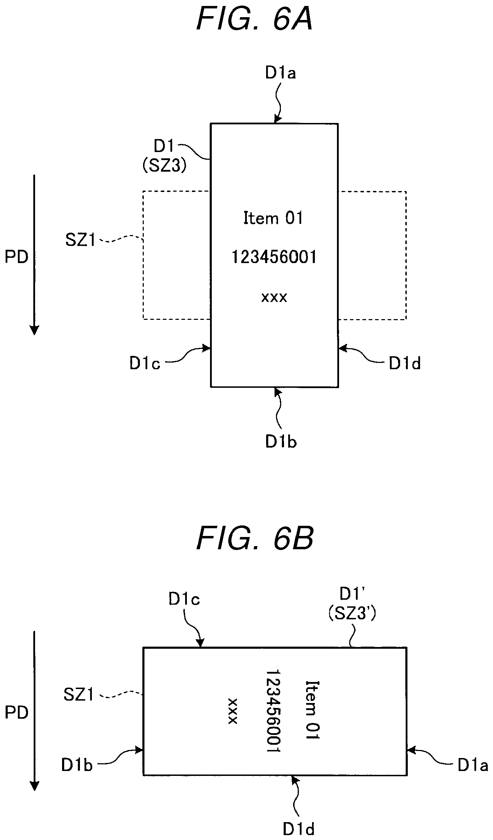

When the printing data D1 of FIG. 5 is printed by using the label sheet PR1 of FIG. 3A, the preprocessing unit 12 compares the effective printing size SZ1 of the label sheet PR1 with the printing size SZ3 of the printing data D1 in the width direction and the height direction. As a result of the comparison, if L1a>L3a and L1b<L3b, as illustrated in FIG. 6A, since the printing size SZ3 does not fall within the effective printing size SZ1, the preprocessing unit 12 determines if the rotation accommodation condition is met.

In the determining of the rotation accommodation condition, for example, if L1a≥L3b and L1b≥L3a, the preprocessing unit 12 determines that the rotation accommodation condition is satisfied. In this case, as illustrated in FIG. 6B, the preprocessing unit 12 generates printing data D1' obtained by rotating the orientation of the image by 90 degrees.

FIG. 6B is a view illustrating a relationship between a printing size SZ3' (printing data D1') and the effective printing size SZ1 after the orientation of the image is rotated by 90 degrees. As illustrated in FIGs. 6A and 6B, the image is rotated by 90 degrees, so that the printing direction is a direction from a side D1c to a side D1d, and the side D1c is the reference side. In addition, since the lengths in the width direction and the height direction are exchanged with each other with those before rotation, the printing size SZ3' falls within the effective printing size SZ1. FIG. 6B illustrates a state of L1a=L3b and L1b=L3a.

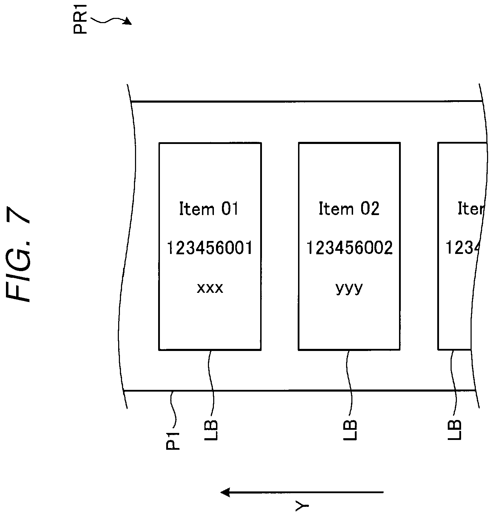

When the print control unit 13 performs printing on the label sheet PR1 using the image (printing data D1') after rotation, as illustrated in FIG. 7, the entire image of the printing data D1' is printed within the effective printing size SZ1, that is, within the label LB. FIG. 7 illustrates an example in which the printing data D1' having different printing contents is continuously printed on each label LB provided in the label sheet PR1.

As described above, in the printer 10, if the printing size of the image does not fall within the effective printing size, the printing size falls within the effective printing size by rotating or reducing the image, and then the printing on the sheet is executed. Therefore, since the printer 10 can print the entire image of the printing target on the roll sheet PR, it is possible to prevent occurrence of print missing in which printing is performed in a state where a part of the image is missing.

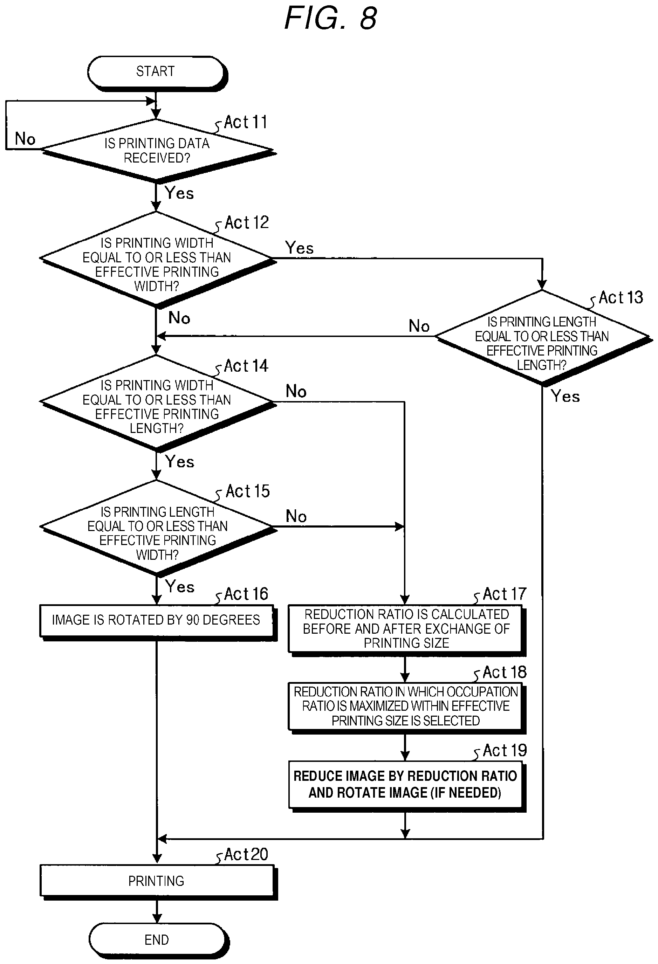

Next, an operation of the printer 10 will be described with reference to FIG. 8. FIG. 8 is a flowchart illustrating an example of printing executed by the printer 10.

First, the printing data receiving unit 11 waits until the printing data is transmitted from the host apparatus 20 (Act 11; No). When the printing data is transmitted from the host apparatus 20, the printing data receiving unit 11 receives the printing data via the connection interface 120 (Act 11; Yes).

Subsequently, the preprocessing unit 12 determines whether or not the length of the printing size in the width direction (hereinafter, referred to as a printing width) is equal to or less than the effective printing width based on the printing direction and the printing size included in the printing data (Act 12). If it is determined that the printing width is equal to or less than the effective printing width (Act 12; Yes), the preprocessing unit 12 determines whether or not the length of the printing size in the height direction (hereinafter, referred to as a printing length) is equal to or less than the effective printing length (Act 13). If it is determined that the printing length is equal to or less than the effective printing length (Act 13; Yes), the preprocessing unit 12 determines that the printing size falls within the effective printing size and the procedure proceeds to Act 20. In Act 13, if it is determined that the printing length exceeds the effective printing length (Act 13; No), the procedure proceeds to Act 14.

In Act 12, if it is determined that the printing width exceeds the effective printing width (Act 12; No), the preprocessing unit 12 determines whether or not the printing width is equal to or less than the effective printing length (Act 14). If it is determined that the printing width is equal to or less than the effective printing length (Act 14; Yes), the preprocessing unit 12 determines whether or not the printing length is equal to or less than the effective printing width (Act 15). If it is determined that the printing length is equal to or less than the effective printing width (Act 15; Yes), the preprocessing unit 12 determines that the rotation accommodation condition is satisfied and the image is rotated by 90 degrees (Act 16), and then the procedure proceeds to Act 20.

On the other hand, in Act 14, if it is determined that the printing width is exceeds the effective printing length (Act 14; No), or if it is determined that the printing length exceeds the effective printing width in Act 15 (Act 15; No), the preprocessing unit 12 determines that the rotation accommodation condition is not satisfied and the procedure proceeds to Act 17.

In Act 17, the preprocessing unit 12 calculates respective reduction ratios (effective reduction ratios) for the printing sizes before and after the lengths in the width direction and the height direction are exchanged with each other (Act 17). Next, the preprocessing unit 12 selects the reduction ratio, in which the occupation ratio is maximized within the effective printing size, in the reduction ratios calculated in Act 17 (Act 18).

Subsequently, in Act 18, the preprocessing unit 12 reduces the image using the selected reduction ratio (Act 19) and the procedure proceeds to Act 20. If the reduction ratio after the exchange is selected, the preprocessing unit 12 rotates the image by 90 degrees before or after the reduction of the image. In addition, the preprocessing unit 12 may cause the display device 107 to display a confirmation screen for confirming whether or not the reduction is performed when the printing size is reduced.

Subsequently, in Act 20, the print control unit 13 prints the image processed by the preprocessing unit 12 on the roll sheet PR (Act 20), and the procedure is completed. If the effective printing length is unlimited (unset), the preprocessing unit 12 skips Act 13 and Act 14.

As described above, the printer 10 compares the printing size, in which the lengths in the width direction and the height direction are exchanged with each other, with the effective printing size if the printing size of the printing data exceeds the effective printing size. If the printing size after exchange falls within the effective printing size, the printer 10 prints the image obtained by rotating the orientation (printing direction) of the image by 90 degrees, on the roll sheet PR. Therefore, the printer 10 can cause the image of the printing target to fall within the effective printing size while maintaining an original printing size, so that the entire image can be efficiently printed.

In addition, if the printing size after the exchange does not fall within the effective printing size, the printer 10 reduces the image (printing size) to a size which falls within the effective printing size, using the reduction ratio in which the occupation ratio is maximized within the effective printing size. Therefore, since the printer 10 can secure a large printing size within the effective printing size, the entire image of the printing target can be efficiently printed.

In addition, the printer 10 calculates respective reduction ratios from the printing size before and after the exchange, and reduces the printing size using the reduction ratio in which the occupation ratio is larger within the effective printing size. Therefore, since it is possible to secure the printing size to be larger within the effective printing size, the entire image of the printing target can be more efficiently printed.

In addition, in the embodiments described above, if the printing size of the printing data falls within the effective printing size, the printing data is printed as it is, but the configuration is not limited to the embodiments, and the printing size is enlarged in a range in which the printing size falls within the effective printing size, and then printing may be performed. If the configuration is adopted, the preprocessing unit 12 calculates an enlargement ratio in which the occupation ratio of the printing size within the effective printing size is maximized and enlarges the image (printing size) using the calculated enlargement ratio while maintaining the aspect ratio of the printing size. Similar to the reduction ratio, respective enlargement ratios are calculated for the printing sizes before and after the exchange in the width direction and the height direction, and the enlargement may be performed by using the enlargement ratio in which the occupation ratio is larger within the effective printing size.

In addition, in the embodiments described above, if the printing size satisfies the rotation accommodation condition, the printing direction is rotated by 90 degrees, but the rotation angle may be 270 degrees (-90 degrees). In addition, one of 90 degrees and 270 degrees may be selected.

In addition, in the embodiments described above, the preprocessing unit 12 performs rotation and reduction of the image, but the configuration is not limited to the embodiments, and the rotation and the reduction of the image may be performed by the print control unit 13. If the configuration is adopted, the preprocessing unit 12 determines the rotation angle and the reduction ratio of the image based on the comparison result of the printing size and the effective printing size. The print control unit 13 prints the image subjected to the rotating or the reducing based on the rotation and or the reduction ratio determined by the preprocessing unit 12.

The program executed by the printer 10 of the embodiments may be configured so as to be supplied by being recorded on a computer readable recording medium such as a floppy (registered trademark) disk, a Compact Disc (CD), a Compact Disc-Recordable (CD-R), a Compact Disc Read Only Memory (CD-ROM), a Digital Versatile Disc (DVD), a SD memory card, or a Universal Serial Bus memory (USB memory), in a file in installable format of executable format.

In addition, the program executed by the printer 10 of the embodiments described above may be stored on a computer connected to a network such as the Internet and provided by downloading via a network or the like.

## Claims

1. A roll fed thermal printer apparatus comprising:
a printing unit (122) comprising a thermal head (104);
a connection interface (120); and
a processor (111) configured to:
control the connection interface (120) to receive, from an external apparatus (20), image data indicating an image for printing and size data indicating a first length in a width direction and a second length in a height direction of the image;
compare the first length and the second length respectively with a third length in the width direction and a fourth length in the height direction that are defined as a printable size on a roll sheet (PR); the printable size being determined based on a width of the thermal head (104) in the width direction and
control the printing unit (122) to print the image on the roll sheet (PR) based on the comparison,
wherein the processor (111) is further configured:
when the first length is greater than the third length or the second length is greater than the fourth length, to compare the first length and the second length with the fourth length and the third length, respectively, and
when the first length is less than or equal to the fourth length and the second length is less than or equal to the third length, to rotate the image by 90 degrees or 270 degrees before printing the image,
**characterized in that** the processor is configured:
when the first length is greater than the fourth length or the second length is greater than the third length, to reduce the image so that the image size is within the printable size while an aspect ratio of the image is maintained, before printing the image,
determine the smaller of a value obtained by dividing the third length by the first length and a value obtained by dividing the fourth length by the second length as a first reduction ratio; the first reduction ratio being at which an occupation ratio of an actual printing size of the image that is not rotated within the printable size is maximized;
determine the smaller of a value obtained by dividing the fourth length by the first length and a value obtained by dividing the third length by the second length as a second reduction ratio; the second reduction ratio being at which an occupation ratio of an actual printing size of the rotated image within the printable size is maximized; and
select the greater of the first reduction ration and the second reduction ratio.

2. The roll fed thermal printer apparatus according to claim 1, further comprising a display device (107),
wherein the processor (111) is further configured to control the display device (107) to display information for confirming whether or not the reduction of the image is acceptable before reducing the image.

3. The roll fed thermal printer apparatus according to claim 1 or 2, further comprising a sensor (105),
wherein the processor (111) is further configured to identify the printable size based on an output from the sensor (105) that has detected the roll sheet (PR).

4. The roll fed thermal printer apparatus according to any one of claims 1 to 3, wherein the processor (111) is further configured:
after printing a first image after rotation, to control the printing unit (122) to print a second image on the roll sheet (PR) after rotating the second image.

5. A printing method carried out by a roll fed thermal printer apparatus, the method comprising:
receiving from an external apparatus (20) image data indicating an image for printing and size data indicating a first length in a width direction and a second length in a height direction of the image;
comparing the first length and the second length respectively with a third length in the width direction and a fourth length in the height direction that are defined as a printable size on a roll sheet (PR); the printable size being determined based on a width of the thermal head (104) in the width direction and
printing the image on the roll sheet (PR) based on the comparison,
wherein the method further comprises:
when the first length is greater than the third length or the second length is greater than the fourth length, comparing the first length and the second length with the fourth length and the third length, respectively; and
when the first length is less than or equal to the fourth length and the second length is less than or equal to the third length, rotating the image by 90 degrees or 270 degrees before the image is printed
**characterized in that** the method further comprises:
when the first length is greater than the fourth length or the second length is greater than the third length, reducing the image so that the image size is within the printable size while an aspect ratio of the image is maintained, before printing the image,
determining the smaller of a value obtained by dividing the third length by the first length and a value obtained by dividing the fourth length by the second length as a first reduction ratio; the first reduction ratio being at which an occupation ratio of an actual printing size of the image that is not rotated within the printable size is maximized;
determining the smaller of a value obtained by dividing the fourth length by the first length and a value obtained by dividing the third length by the second length as a second reduction ratio; the second reduction ratio being at which an occupation ratio of an actual printing size of the rotated image within the printable size is maximized; and
selecting the greater of the first reduction ration and the second reduction ratio.

6. The method according to claim 5, further comprising:
displaying on a display information for confirming whether or not the reduction of the image is acceptable before the image is reduced.

7. The method according to claim 5 or 6, wherein the printable size is identified based on an output from a sensor of the printer apparatus that has detected the printing medium.

8. A non-transitory computer readable medium storing a program causing a computer to execute a printing process comprising the steps of the method according to any one of claims 5 to 7.

## Patentansprüche

1. Rollfed-Thermodruckervorrichtung, umfassend:
eine Druckeinrichtung (122), umfassend einen Thermokopf (104);
eine Verbindungsschnittstelle (120) und
einen Prozessor (111), der konfiguriert ist:
zum Ansteuern der Verbindungsschnittstelle (120) zum Empfangen von Bilddaten, aus denen ein zu druckendes Bild hervorgeht, und Größendaten, aus denen eine erste Länge in einer Breitenrichtung und eine zweite Länge in einer Höhenrichtung des Bildes hervorgehen, von einem externen Gerät (20);
zum Vergleichen der ersten bzw. zweiten Länge mit einer dritten Länge in Breitenrichtung und einer vierten Länge in Höhenrichtung, die als bedruckbare Fläche auf einem Rollbogen (PR) definiert sind, wobei sich die bedruckbare Fläche nach einer Breite des Thermokopfs (104) in Breitenrichtung bestimmt,
und
zum Ansteuern der Druckeinrichtung (122) zum Drucken des Bildes auf dem Rollbogen (PR) aufgrund des Vergleichs,
wobei der Prozessor (111) ferner konfiguriert ist:
wenn die erste Länge die dritte Länge übersteigt oder die zweite Länge die vierte Länge übersteigt: zum Vergleichen der ersten und zweiten Länge mit der vierten bzw. dritten Länge, und
wenn die erste Länge kleiner oder gleich der vierten Länge und die zweite Länge kleiner oder gleich der dritten Länge ist: zum Rotieren des Bildes um 90 oder 270 ° vor dem Drucken des Bildes,
**dadurch gekennzeichnet, dass** der Prozessor konfiguriert ist:
wenn die erste Länge die vierte Länge übersteigt oder die zweite Länge die dritte Länge übersteigt: zum Verkleinern des Bildes unter Beibehaltung des Seitenverhältnisses des Bildes, damit die Bildgröße innerhalb der bedruckbaren Fläche liegt, bevor das Bild gedruckt wird,
zum Bestimmen der jeweils Kleineren einer durch Teilen der dritten Länge durch die erste Länge erhaltenen Größe und einer durch Teilen der vierten Länge durch die zweite Länge erhaltenen Größe als ersten Verkleinerungsverhältnisses; wobei das erste Verkleinerungsverhältnis ein Verhältnis ist, bei dem ein Belegungsverhältnis einer Ist-Druckgröße des nicht innerhalb der bedruckbaren Fläche rotierten Bildes maximiert ist;
zum Bestimmen der jeweils Kleineren einer durch Teilen der vierten Länge durch die dritte Länge erhaltenen Größe und einer durch Teilen der dritten Länge durch die zweite Länge erhaltenen Größe als zweiten Verkleinerungsverhältnisses;
wobei das zweite Verkleinerungsverhältnis ein Verhältnis ist, bei dem ein Belegungsverhältnis einer Ist-Druckgröße des innerhalb der bedruckbaren Fläche rotierten Bildes maximiert ist; und
zum Auswählen des jeweils Größeren des ersten und zweiten Verkleinerungsverhältnisses.

2. Rollfed-Thermodruckervorrichtung nach Anspruch 1, ferner umfassend eine Anzeigevorrichtung (107),
wobei der Prozessor (111) ferner konfiguriert ist zum Ansteuern der Anzeigevorrichtung (107) zum Anzeigen von Informationen, um vor dem Verkleinern des Bildes zu bestätigen, ob die Verkleinerung des Bildes akzeptabel ist oder nicht.

3. Rollfed-Thermodruckervorrichtung nach Anspruch 1 oder 2, ferner umfassend einen Sensor (105),
wobei der Prozessor (111) ferner konfiguriert ist zum Erkennen der bedruckbaren Fläche aufgrund einer Ausgabe des Sensors (105), der den Rollbogen (PR) erkannt hat.

4. Rollfed-Thermodruckervorrichtung nach einem der Ansprüche 1-3, wobei der Prozessor (111) ferner konfiguriert ist:
im Anschluss an das Drucken eines ersten Bildes nach der Rotation: zum Ansteuern der Druckeinrichtung (122) zum Drucken eines zweiten Bildes auf dem Rollbogen (PR) nach dem Rotieren des zweiten Bildes.

5. Durch eine Rollfed-Thermodruckvorrichtung ausgeführtes Druckverfahren, wobei das Verfahren umfasst:
Empfangen von Bilddaten, aus denen ein zu druckendes Bild hervorgeht, und Größendaten, aus denen eine erste Länge in einer Breitenrichtung und eine zweite Länge in einer Höhenrichtung des Bildes hervorgehen, von einem externen Gerät (20);
Vergleichen der ersten bzw. zweiten Länge mit einer dritten Länge in Breitenrichtung und einer vierten Länge in Höhenrichtung, die als bedruckbare Fläche auf einem Rollbogen (PR) definiert sind, wobei sich die bedruckbare Fläche nach einer Breite des Thermokopfs (104) in Breitenrichtung bestimmt, und
Drucken des Bildes auf dem Rollbogen (PR) aufgrund des Vergleichs,
wobei das Verfahren ferner umfasst:
wenn die erste Länge die dritte Länge übersteigt oder die zweite Länge die vierte Länge übersteigt: Vergleichen der ersten und zweiten Länge mit der vierten bzw. dritten Länge, und
wenn die erste Länge kleiner oder gleich der vierten Länge und die zweite Länge kleiner oder gleich der dritten Länge ist: Rotieren des Bildes um 90 oder 270 ° vor dem Drucken des Bildes,
**dadurch gekennzeichnet, dass** das Verfahren ferner umfasst:
wenn die erste Länge die vierte Länge übersteigt oder die zweite Länge die dritte Länge übersteigt: Verkleinern des Bildes unter Beibehaltung des Seitenverhältnisses des Bildes, damit die Bildgröße innerhalb der bedruckbaren Fläche liegt, bevor das Bild gedruckt wird,
Bestimmen der jeweils Kleineren einer durch Teilen der dritten Länge durch die erste Länge erhaltenen Größe und einer durch Teilen der vierten Länge durch die zweite Länge erhaltenen Größe als ersten Verkleinerungsverhältnisses;
wobei das erste Verkleinerungsverhältnis ein Verhältnis ist, bei dem ein Belegungsverhältnis einer Ist-Druckgröße des nicht innerhalb der bedruckbaren Fläche rotierten Bildes maximiert ist;
Bestimmen der jeweils Kleineren einer durch Teilen der vierten Länge durch die dritte Länge erhaltenen Größe und einer durch Teilen der dritten Länge durch die zweite Länge erhaltenen Größe als zweiten Verkleinerungsverhältnisses; wobei das zweite Verkleinerungsverhältnis ein Verhältnis ist, bei dem ein Belegungsverhältnis einer Ist-Druckgröße des innerhalb der bedruckbaren Fläche rotierten Bildes maximiert ist;
und
Auswählen des jeweils Größeren des ersten und zweiten Verkleinerungsverhältnisses.

6. Verfahren nach Anspruch 5, ferner umfassend:
Anzeigen von Informationen auf einer Anzeige, um vor dem Verkleinern des Bildes zu bestätigen, ob die Verkleinerung des Bildes akzeptabel ist oder nicht.

7. Verfahren nach Anspruch 5 oder 6, wobei die bedruckbare Fläche aufgrund einer Ausgabe des Sensors, der den Rollbogen erkannt hat, erkannt wird.

8. Nicht flüchtiger, computerlesbarer Datenträger, auf dem ein Programm gespeichert ist, das einen Computer dazu veranlasst, einen die Schritte des Verfahrens nach einem der Ansprüche 5 - 7 umfassenden Druckprozess auszuführen.

## Revendications

1. Appareil d'impression thermique alimenté par rouleau, comprenant :
une unité d'impression (122) comprenant une tête thermique (104) ;
une interface de connexion (120) ; et
un processeur (111) configuré de manière à :
commander l'interface de connexion (120) en vue de recevoir, en provenance d'un appareil externe (20), des données d'image indiquant une image à imprimer, et des données de taille indiquant une première longueur dans une direction de largeur et une deuxième longueur dans une direction de hauteur de l'image ;
comparer la première longueur et la deuxième longueur, respectivement, à une troisième longueur dans la direction de largeur, et à une quatrième longueur dans la direction de hauteur, lesquelles sont définies en tant qu'une taille imprimable sur une feuille en rouleau (PR) ; la taille imprimable étant déterminée sur la base d'une largeur de la tête thermique (104) dans la direction de largeur et
commander l'unité d'impression (122) en vue d'imprimer l'image sur la feuille en rouleau (PR) sur la base de la comparaison ;
dans lequel le processeur (111) est en outre configuré de manière à :
lorsque la première longueur est supérieure à la troisième longueur, ou lorsque la deuxième longueur est supérieure à la quatrième longueur, comparer la première longueur et la deuxième longueur à la quatrième longueur et à la troisième longueur, respectivement ; et
lorsque la première longueur est inférieure ou égale à la quatrième longueur, et lorsque la deuxième longueur est inférieure ou égale à la troisième longueur, faire pivoter l'image de 90 degrés ou de 270 degrés, avant d'imprimer l'image ;
**caractérisé en ce que** le processeur est configuré de manière à :
lorsque la première longueur est supérieure à la quatrième longueur, ou lorsque la deuxième longueur est supérieure à la troisième longueur, réduire l'image de sorte que la taille d'image se situe dans la taille imprimable tandis qu'un rapport d'aspect de l'image est maintenu, avant d'imprimer l'image ;
déterminer la valeur la plus petite parmi une valeur obtenue en divisant la troisième longueur par la première longueur et une valeur obtenue en divisant la quatrième longueur par la deuxième longueur, en tant qu'un premier rapport de réduction ; le premier rapport de réduction correspondant à un rapport auquel un rapport d'occupation d'une taille d'impression réelle de l'image qui n'est pas pivotée dans la taille imprimable est maximisé ;
déterminer la valeur la plus petite parmi une valeur obtenue en divisant la quatrième longueur par la première longueur et une valeur obtenue en divisant la troisième longueur par la deuxième longueur, en tant qu'un second rapport de réduction ; le second rapport de réduction correspondant à un rapport auquel un rapport d'occupation d'une taille d'impression réelle de l'image pivotée dans la taille imprimable est maximisé ; et
sélectionner le rapport le plus élevé parmi le premier rapport de réduction et le second rapport de réduction.

2. Appareil d'impression thermique alimenté par rouleau selon la revendication 1, comprenant en outre un dispositif d'affichage (107),
dans lequel le processeur (111) est en outre configuré de manière à commander le dispositif d'affichage (107) en vue d'afficher des informations visant à confirmer si la réduction de l'image est acceptable ou non avant de réduire l'image.

3. Appareil d'impression thermique alimenté par rouleau selon la revendication 1 ou 2, comprenant en outre un capteur (105),
dans lequel le processeur (111) est en outre configuré de manière à identifier la taille imprimable sur la base d'une sortie en provenance du capteur (105) qui a détecté la feuille en rouleau (PR).

4. Appareil d'impression thermique alimenté par rouleau selon l'une quelconque des revendications 1 à 3, dans lequel le processeur (111) est en outre configuré de manière à :
suite à l'impression d'une première image après rotation, commander l'unité d'impression (122) afin d'imprimer une seconde image sur la feuille en rouleau (PR) après rotation de la seconde image.

5. Procédé d'impression mis en œuvre par un appareil d'impression thermique alimenté par rouleau, le procédé comprenant les étapes ci-dessous consistant à :
recevoir, en provenance d'un appareil externe (20), des données d'image indiquant une image à imprimer, et des données de taille indiquant une première longueur dans une direction de largeur et une deuxième longueur dans une direction de hauteur de l'image ;
comparer la première longueur et la deuxième longueur, respectivement, à une troisième longueur dans la direction de largeur, et à une quatrième longueur dans la direction de hauteur, lesquelles sont définies en tant qu'une taille imprimable sur une feuille en rouleau (PR) ; la taille imprimable étant déterminée sur la base d'une largeur de la tête thermique (104) dans la direction de largeur ; et
imprimer l'image sur la feuille en rouleau (PR), sur la base de la comparaison ;
dans lequel le procédé comprend en outre les étapes ci-dessous consistant à :
lorsque la première longueur est supérieure à la troisième longueur, ou lorsque la deuxième longueur est supérieure à la quatrième longueur, comparer la première longueur et la deuxième longueur à la quatrième longueur et à la troisième longueur, respectivement ; et
lorsque la première longueur est inférieure ou égale à la quatrième longueur, et lorsque la deuxième longueur est inférieure ou égale à la troisième longueur, faire pivoter l'image de 90 degrés ou de 270 degrés, avant d'imprimer l'image ;
**caractérisé en ce que** le procédé comprend en outre les étapes ci-dessous consistant à :
lorsque la première longueur est supérieure à la quatrième longueur, ou lorsque la deuxième longueur est supérieure à la troisième longueur, réduire l'image de sorte que la taille d'image se situe dans la taille imprimable tandis qu'un rapport d'aspect de l'image est maintenu, avant d'imprimer l'image ;
déterminer la valeur la plus petite parmi une valeur obtenue en divisant la troisième longueur par la première longueur et une valeur obtenue en divisant la quatrième longueur par la deuxième longueur, en tant qu'un premier rapport de réduction ; le premier rapport de réduction correspondant à un rapport auquel un rapport d'occupation d'une taille d'impression réelle de l'image qui n'est pas pivotée dans la taille imprimable est maximisé ;
déterminer la valeur la plus petite parmi une valeur obtenue en divisant la quatrième longueur par la première longueur et une valeur obtenue en divisant la troisième longueur par la deuxième longueur, en tant qu'un second rapport de réduction ; le second rapport de réduction correspondant à un rapport auquel un rapport d'occupation d'une taille d'impression réelle de l'image pivotée dans la taille imprimable est maximisé ; et
sélectionner le rapport le plus élevé parmi le premier rapport de réduction et le second rapport de réduction.

6. Procédé selon la revendication 5, comprenant en outre l'étape ci-dessous consistant à :
afficher, sur un écran d'affichage, des informations visant à confirmer si la réduction de l'image est acceptable ou non, avant que l'image ne soit réduite.

7. Procédé selon la revendication 5 ou 6, dans lequel la taille imprimable est identifiée sur la base d'une sortie en provenance d'un capteur de l'appareil d'impression qui a détecté le support d'impression.

8. Support non transitoire lisible par ordinateur stockant un programme amenant un ordinateur à exécuter un processus d'impression comprenant les étapes du procédé selon l'une quelconque des revendications 5 à 7.
